# EUROPEAN PATENT SPECIFICATION

(11) **EP 0 757 634 B1**
(45) Date of publication and mention of the grant of the patent: **30.12.1998**
(21) Application number: 95916758.6
(22) Date of filing: 25.04.1995
(51) Int. Cl.: B60R 19/00, B60R 21/00, B62D 25/16

(54) **VEHICLE CHASSIS HAVING AN OCCUPANT CELL**
FAHRZEUGUNTERBAU MIT FAHRGASTRAUM
CHASSIS DE VEHICULE COMPRENANT UN HABITACLE

(30) Priority: 27.04.1994 DE 4414661
(43) Date of publication of application: 12.02.1997
(73) Proprietor: FORD MOTOR COMPANY LIMITED, Brentwood, Essex CM13 3BW (GB); FORD-WERKE AKTIENGESELLSCHAFT, 50735 Köln (DE); FORD FRANCE S. A., 92506 Rueil-Malmaison Cédex (FR); Ford Motor Company, Dearborn, MI 48126 (US)
(72) Inventor: BRAUN, Eberhard, D-53721 Stegburg (DE)
(74) Representative: Messulam, Alec Moses
(86) International application number: GB9500935
(87) International publication number: WO9529078

(56) References cited:
- WO-A-92/09456
- DE-U- 9 312 073
- GB-A- 953 312
- US-A- 2 326 720
- US-A- 2 721 616

## Description

This invention relates to a vehicle chassis having an occupant cell and an engine and/or transmission compartment.

A problem that arises particularly in the case of smaller vehicles is that if the vehicle is involved in a collision, either with another vehicle or with a stationary object, the engine and/or the transmission is or are forced into the occupant cell, which can cause injuries to the occupants of the vehicle. As a precaution against this it is known to surround the occupant cell with sheet metal structures which deform plastically in the event of impact of the vehicle, in order thereby so far as possible to reduce the shock effects on the occupant cell and prevent the penetration of objects into the occupant cell. However, the incorporation of such sheet metal structures, particularly into small or medium-sized vehicles, brings with it the disadvantage that the vehicles are thereby made heavier and/or larger. If corresponding sheet metal structures are provided to a reduced extent, however, they can only fulfil their intended function in a very restricted way.

It is also well-known to provide one or more explosively inflatable airbags inside the occupant cell, in front of the driver and front seat passenger, to protect them from injury by impact with the steering wheel and/or dashboard.

It has further been proposed in German Utility Model DE 87 10 043 U1 to provide a tanker vehicle with airbags surrounding the tank to prevent damage to the tank in the event of collision or of the vehicle overturning.

Prior art document WO92/09456 represents the most relevant prior art. It shows an occupant cell of a vehicle, which is protected against impact by means of one or more air bags and is particular adapted to vehicles in which the dimensions of the surrounding structure of the cell are too restricted to obtain the necessary crumbling zone. These air bags extend in the inflated state beyond the contour of the vehicle in its normal state.

It is an object of the invention to provide a vehicle chassis such that even in the case of medium-sized and small vehicles, for which a particularly weight-saving and space-saving design is required, improved protection is provided against objects, particularly the engine and/or transmission, being forced into the occupant cell in the event that the vehicle suffers impact.

This object is achieved, in accordance with the invention, by arranging at least one airbag between the occupant cell and the engine and/or the transmission compartment. Advantageously the occupant cell is surrounded with a plurality of airbags.

In the case of the vehicle chassis in accordance with the invention, on impact of the vehicle with another vehicle or with a stationary object explosive inflation, i.e. filling with gas, of least one airbag arranged between the occupant cell and the engine and/or transmission compartment, is triggered by means of a sensor. In its inflated condition this airbag is supported and retained at its rear by the front wall of the occupant cell, so that in the event of an impact it forms a barrier to movement of the engine and/or transmission towards the occupant cell which has an effect comparable to that of a deformable sheet metal structure. An inflated airbag on the one hand exhibits elastic properties and in addition is emptied again in known manner immediately after the explosive inflation. Thus should the engine or transmission or both move towards the occupant cell, the engine or transmission is captured by the inflated airbag. Because of the specific property of an inflated airbag of adapting its shape to that of an object acting on it, an inflated airbag offers a relatively large target surface to an object acting on it, so that the force is distributed over a correspondingly large part of the airbag surface. The kinetic energy of the object acting on the surface of the inflated airbag leads to deformation of the airbag and at the same time to an increase in pressure in the interior of the airbag, which however is compensated by the emptying process which takes place immediately after the explosive inflation. Hence an airbag is able, in a particularly effective manner, to protect the occupant cell from objects penetrating into it, for example the engine and/or the transmission of the vehicle itself, or from other objects of any kind.

The vehicle chassis may be fitted with a plurality of airbags around the occupant cell. In this way the object of protecting the occupant cell against penetration of objects into it can also be achieved in the case of an impact on the vehicle from the rear, particularly by another vehicle. In the same manner airbags arranged to the side of the occupant cell can protect the occupant cell from objects penetrating from the side, e.g. in the event of a side impact.

According to a further preferred embodiment of the vehicle chassis of the invention airbags are provided at least in the front wheel arches of the vehicle chassis between the wheels and the occupant cell. In particular, this enables penetration of the wheels into the interior of the occupant cell to be prevented or reduced.

The invention will now be described in more detail with reference to the exemplary embodiment illustrated diagrammatically in the drawings, in which:
- Fig. 1: shows portions of a vehicle chassis diagrammatically in side elevation;
- Fig. 2: is a plan view from above of the arrangement shown in Fig. 1.

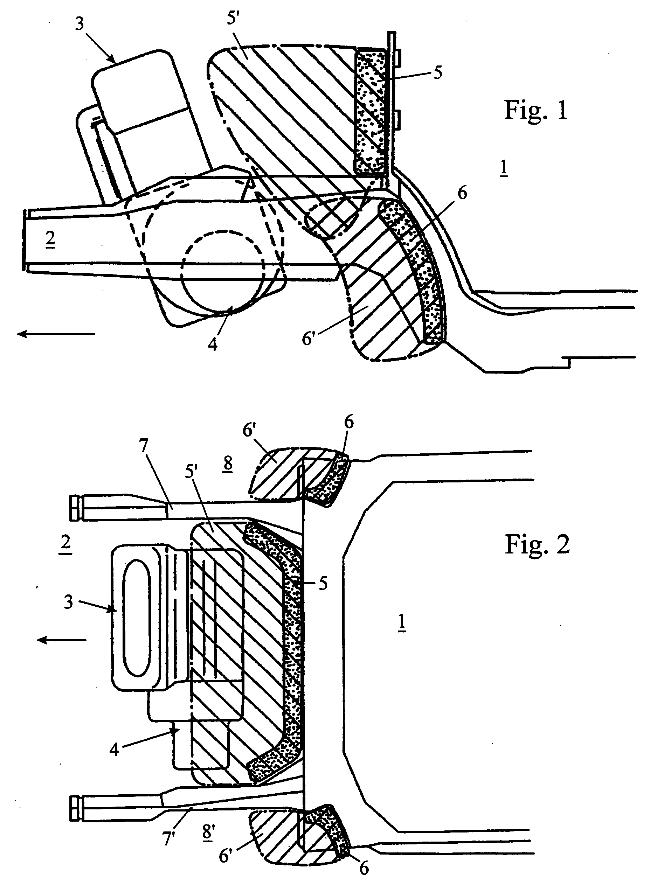

In the embodiment of a vehicle chassis in accordance with the invention illustrated in Figs. 1 and 2 an occupant cell is indicated by 1 and an engine and transmission compartment, bounded at the sides by longitudinal members 7 and 7' respectively and to the rear by the occupant cell 1, is indicated by 2. An engine 3 and a transmission 4 of the vehicle are situated in the engine and transmission compartment 2. An airbag 5 is situated between the occupant cell 1 and the engine and transmission. In the folded-up stand-by condition indicated by the reference numeral 5 the airbag bounds the engine and transmission compartment 2 to the rear - i.e. it is situated between the compartment 2 and the occupant cell 1 - while the reference numeral 5' shows the airbag when explosively inflated (i.e. filled with gas) by a control mechanism (not shown) which is triggered by an impact. In each of the right-hand front well 8 and the left-hand front well 8' of the vehicle chassis a respective airbag 6 is arranged on the boundary wall to the occupant cell 1. When its inflation control mechanism is triggered by an impact of the vehicle, the airbag 6 takes up, in the inflated condition, the shape 6'. Through the action of the inflated airbag 6' a wheel (not shown) situated in the corresponding wheel arch 8 or 8' is prevented from penetrating into the interior of the occupant cell.

## Claims

1. A vehicle chassis having an occupant cell and an engine and/or transmission compartment, characterised in that at least one airbag (5) is situated between the occupant cell (1) and the engine and/or transmission compartment (2).

2. A vehicle chassis according to claim 1, characterised in that airbags (6) are also provided in the front wheel arches (8, 8') of the vehicle chassis, situated between the respective wheels and the occupant cell (1).

3. A vehicle chassis according to claim 1 or claim 2, characterised in that the occupant cell (1) is surrounded by a plurality of airbags.

## Patentansprüche

1. Eine Fahrzeugkarosserie mit einem Beifahrerraum und einem Motor- und/oder Getriebegehäuse, dadurch gekennzeichnet dass sich mindestens ein Airbag (5) (aufblasbares Luftkissen) zwischen dem Beifahrerraum (1) und dem Motor- und/oder Getriebegehäuse (2) befindet.

2. Eine Fahrzeugkarosserie nach Anspruch 1, dadurch gekennzeichnet dass Airbags (6) ebenfalls in den Vorderradbögen (8, 8') der Fahrzeugkarosserie vorhanden sind, die sich zwischen den jeweiligen Rädern und dem Beifahrerraum (1) befinden.

3. Eine Fahrzeugkarosserie nach Anspruch 1 oder 2, dadurch gekennzeichent dass der Beifahrerraum (1) von einer Vielzahl von Airbags umgeben ist.

## Revendications

1. Châssis de véhicule présentant une cellule passager et un compartiment moteur et / ou de transmission, caractérisé en ce qu'au moins un coussin gonflable (5) est situé entre la cellule passager (1) et le compartiment moteur et / ou de transmission (2).

2. Châssis de véhicule selon la revendication 1, caractérisé en ce que des coussins gonflables (6) sont également fournis dans les cintres des roues avant (8, 8') du châssis de véhicule situés entre les roues respectives et la cellule passager (1).

3. Châssis de véhicule selon la revendication 1 ou 2, caractérisé en ce que la cellule passager (1) est entourée de plusieurs coussins gonflables.
